(19) Europäisches Patentamt
European Patent Office
Office européen des brevets

(11) **EP 4 410 077 A1**

(12) **EUROPEAN PATENT APPLICATION**

(43) Date of publication:
**07.08.2024 Bulletin 2024/32**

(21) Application number: **24151758.0**

(22) Date of filing: **15.01.2024**

(51) International Patent Classification (IPC):
**A01B 69/04** (2006.01)

(52) Cooperative Patent Classification (CPC):
**A01B 69/008**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023 JP 2023012870**

(71) Applicant: **Yanmar Holdings Co., Ltd.**
**Osaka-shi, Osaka (JP)**

(72) Inventor: **UEDA, Ryohei**
**Okayama-shi (JP)**

(74) Representative: **Dennemeyer & Associates S.A.**
**Postfach 70 04 25**
**81304 München (DE)**

(54) **FIELD WORK MACHINE**

(57) To provide a technique for improving the safety of a field work machine capable of performing autonomous travel a field work machine (1) is provided. An exemplary field work machine is capable of performing autonomous travel in a field. The field work machine includes a driver's seat (19) that is provided on a machine body (11), an armrest (191) that is provided in the driver's seat, and a control unit (50) that performs control related to the autonomous travel. The control unit prohibits the autonomous travel in response to a detection of a predetermined action that is performed with respect to the armrest (191) by a worker on the machine body (11).

## FIG. 7

```
                    START
                      │
                      ▼           S21
              ARMRESTS ARE IN ──N──┐
              NON-USE POSITION?     │
                      │Y            │
                      ▼    S22      │
              PROVIDE NOTIFICATION  │
              "LOWER THE ARMRESTS   │
              TO START AUTONOMOUS   │
                 TRAVEL"            │
                      │             │
                      ▼             ▼           S23
                 MANUAL      START COMMAND FOR ──N──┐
              TRAVEL MODE    AUTONOMOUS TRAVEL      │
                            HAS BEEN ISSUED?        │
                                   │Y              │
                                   ▼    S24        ▼
                            SHIFT TO AUTONOMOUS   MANUAL
                              TRAVEL MODE       TRAVEL MODE
                                   │
                                   ▼    S25
                               PROVIDE
                            NOTIFICATION "USE
                              THE ARMRESTS"
                                   │
                                   ▼    S26
                            ARMRESTS ARE IN ──N──┐
                            NON-USE POSITION?     │
                                   │Y            ▼
                                   ▼    S27    AUTONOMOUS
                            SHIFT TO MANUAL   TRAVEL MODE
                              TRAVEL MODE
                                   │
                                   ▼    S28
                            PROVIDE NOTIFICATION
                            "LOWER THE ARMRESTS
                            TO START AUTONOMOUS
                               TRAVEL"
                                   │
                                   ▼
                               MANUAL
                            TRAVEL MODE
```

EP 4 410 077 A1

## Description

TECHNICAL FIELD

The present invention relates to a field work machine.

BACKGROUND ART

Known work machines include a work machine that has an automatic steering function in which based on position information measured by a positioning unit, automatic steering of a steering wheel is performed so that the work machine travels along a target travel route (see, for example, Patent Document 1). Patent Document 1 describes, as an example of a condition for canceling automatic steering, an action in which a steering wheel is held again by a driver who is not holding the steering wheel.

PRIOR ART DOCUMENT

PATENT DOCUMENT

Patent Document 1: JP 2016-011024 A

SUMMARY OF INVENTION

TECHNICAL PROBLEM

In a work machine having a conventional configuration, when a driver holds a steering wheel during automatic steering, the automatic steering is stopped. Thus, during automatic steering, the driver cannot hold the steering wheel and may have an unstable posture. Considering this point, the work machine may include an armrest in a driver's seat. The work machine including an armrest allows the driver to have a stable posture, for example, by holding the armrest.

In the work machine including an armrest, an armrest capable of being raised is useful, for example, for the purpose of allowing easy seedling transfer work, or the like. In such a configuration, when automatic steering is performed while the armrest is raised, the driver may have an unstable posture. Furthermore, in order to perform an emergency stop of the automatic steering, the driver holding the armrest needs to operate the steering wheel, and it may take time before the emergency stop is performed.

An object of the present invention is to provide a technique for improving the safety of a field work machine capable of performing autonomous travel.

SOLUTION TO PROBLEM

An exemplary field work machine of the present invention is a field work machine capable of performing autonomous travel in a field, the field work machine including: a driver's seat that is provided on a machine body; an armrest that is provided in the driver's seat; and a control unit that performs control related to the autonomous travel. The control unit prohibits the autonomous travel in response to a detection of a predetermined action that is performed with respect to the armrest by a worker on the machine body.

ADVANTAGEOUS EFFECTS OF INVENTION

The exemplary present invention can improve the safety of a field work machine capable of performing autonomous travel.

BRIEF DESCRIPTION OF DRAWINGS

FIG. 1 is a side view of a schematic configuration of a rice transplanter.
FIG. 2 is a plan view of the schematic configuration of the rice transplanter.
FIG. 3 is a block diagram illustrating the schematic configuration of the rice transplanter.
FIG. 4 is a flowchart showing an example of a shifting process from a manual travel mode to an autonomous travel mode of the rice transplanter.
FIG. 5 is a flowchart showing an example of a shifting process from the autonomous travel mode to the manual travel mode of the rice transplanter.
FIG. 6A is a diagram illustrating a configuration of armrests.
FIG. 6B is a diagram illustrating the configuration of the armrests.
FIG. 7 is a flowchart showing an example of control of a travel mode related to the armrests of the rice transplanter.
FIG. 8A is a diagram illustrating a configuration of an armrest according to a modification.
FIG. 8B is a diagram illustrating the configuration of the armrest according to the modification.
FIG. 9 is a flowchart showing an example of control of the travel mode using a remaining seedling amount detection sensor.
FIG. 10 is a diagram illustrating a method of determining "N time(s)" in FIG. 9.

DESCRIPTION OF EMBODIMENTS

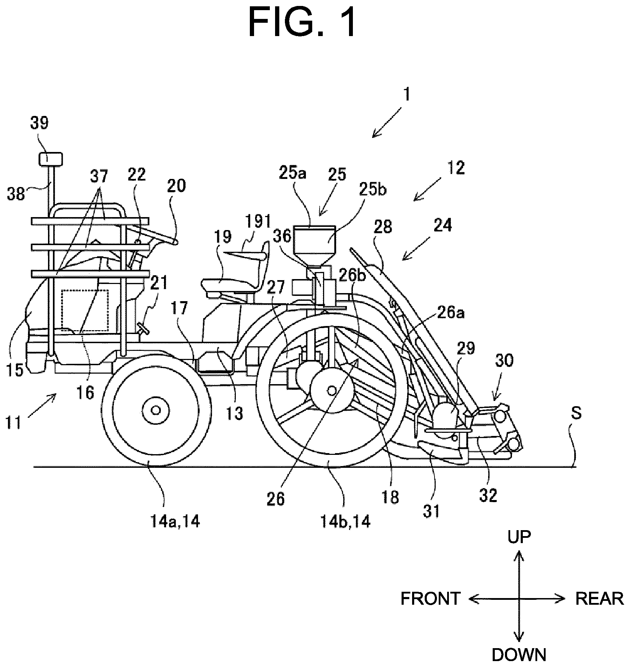

Embodiments of the present invention are described with reference to the drawings. In the drawings, the same or corresponding portions are denoted by the same reference signs, and are not described repeatedly. In the present specification, up and down are defined such that the up-down direction is a direction perpendicular to a travel plane S in which a field work machine 1 shown in FIG. 1 travels and that the up side is the side of the travel plane S on which the field work machine 1 is located. Furthermore, front and rear are defined such that the front-rear direction is a direction in which the field work machine 1 travels straight and that the front side is the side of a driver's seat 19 on which a steering wheel 20 is located. Furthermore, left and right are defined such that the left-right direction is a direction perpendicular to the up-down direction and the front-rear direction and that right is on the right side of the field work machine 1 in the direction from the rear to the front and left is on the left side of the field work machine 1 in the direction from the rear to the front. These directions are merely used for the purpose of illustration, and are not intended to limit the actual positional relationship or directions.

In the embodiments of the present invention, the field work machine 1 is a rice transplanter. Hereinafter, the field work machine 1 is referred to as a rice transplanter 1. However, the field work machine of the present invention may not necessarily be a rice transplanter. The field work machine may be, for example, a combine harvester or a tractor. The field work machine may be a seeding machine that travels while sowing seeds in a field, a fertilizing machine that travels while applying fertilizer in a field, a chemical agent spraying machine that travels while spraying a chemical agent in a field, or the like.

<1. Configuration of rice transplanter>

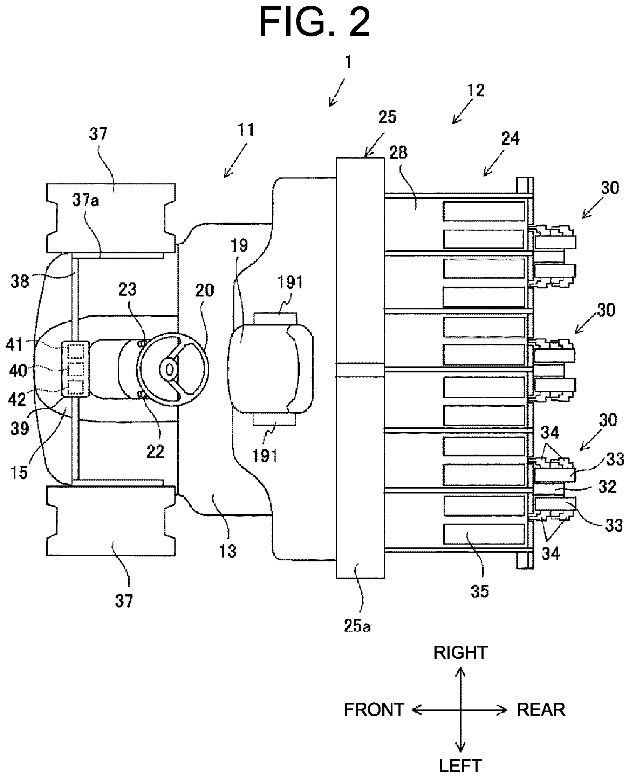

FIG. 1 is a side view of a schematic configuration of the rice transplanter 1 according to an embodiment of the present invention. FIG. 1 is specifically a left side view. FIG. 2 is a plan view of the schematic configuration of the rice transplanter 1 according to the embodiment of the present invention. FIG. 2 is specifically a top view.

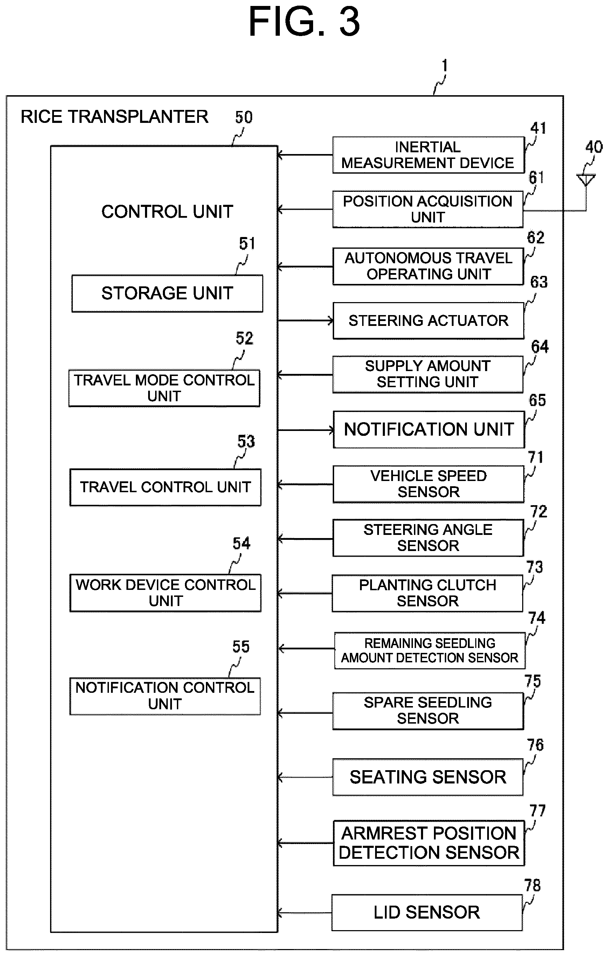

The rice transplanter 1 is capable of performing autonomous travel in a field. Autonomous travel is travel in which a device related to traveling is automatically controlled by a control unit 50 (see FIG. 3 described later) of the rice transplanter 1 and at least steering is autonomously performed so that the rice transplanter 1 travels along a predetermined route. In autonomous travel, for example, control of the vehicle speed may be autonomously performed in addition to steering. The control of the vehicle speed may include control for stopping the travel of the rice transplanter 1.

The rice transplanter 1 performs planting work in which a seedling is planted on the ground of a field, while traveling in the field. As shown in FIGS. 1 and 2, the rice transplanter 1 includes a machine body 11, and a work device 12 that is provided behind the machine body 11.

The machine body 11 includes a machine body frame 13, and a pair of traveling units 14 that support the machine body frame 13 and are spaced apart from each other in the left-right direction. Each of the traveling units 14 includes a front wheel 14a and a rear wheel 14b. A hood 15 is provided on the front side of the machine body frame 13. An engine 16 is provided in the hood 15. Power generated by the engine 16 is transmitted to at least the front wheels 14a or the rear wheels 14b via a transmission case 17 that is provided below the machine body frame 13. Power generated by the engine 16 is also transmitted to the work device 12 via the transmission case 17 and a power take-off shaft (hereinafter referred to as a "PTO shaft 18") that is provided behind the machine body frame 13.

The machine body 11 further includes the driver's seat 19 and a plurality of operating members. That is, the rice transplanter 1 includes the driver's seat 19 provided on the machine body 11. A worker who gets on the machine body 11 can sit in the driver's seat 19. The driver's seat 19 is provided between the front wheels 14a and the rear wheels 14b in the front-rear direction of the machine body 11. The driver's seat 19 is provided with armrests 191. That is, the rice transplanter 1 includes the armrests 191 provided in the driver's seat 19. Details of the armrests 191 are described later. The plurality of operating members include the steering wheel 20, a transmission operating pedal 21, a main transmission lever 22, and a planting clutch lever 23.

The steering wheel 20 is a steering wheel that is used by the worker to steer the rice transplanter 1. The transmission operating pedal 21 is a pedal that is used by the worker to adjust the travel speed of the rice transplanter 1. The main transmission lever 22 is a lever that is used by the worker to select, for example, "forward movement", "backward movement", "stop", or the like. When the main transmission lever 22 is moved to the "forward movement" position, power is transmitted so that the wheels rotate in a direction that causes the rice transplanter 1 to move forward. On the other hand, when the main transmission lever 22 is moved to the "backward movement" position, power is transmitted so that the wheels rotate in a direction that causes the rice transplanter 1 to move backward. When the main transmission lever 22 is moved to the "stop" position, the transmission of power to the wheels is interrupted. The "forward movement" may be divided into forward movement at "low speed" for traveling in a field and forward movement at "high speed" for traveling outside the field. The planting clutch lever 23 is a lever that is used by the worker to perform switching between a transmission state in which a planting clutch transmits power to the PTO shaft 18 (i.e., planting device) and an interruption state in which the planting clutch does not transmit power to the PTO shaft 18 (i.e., planting device).

The work device 12 specifically includes a planting device 24 and a fertilizing device 25. That is, the rice transplanter 1 includes the planting device 24 and the fertilizing device 25.

The planting device 24 is coupled to a rear portion of the machine body 11 via a raising/lowering link mechanism 26. The raising/lowering link mechanism 26 is composed of a parallel link including a top link 26a and a lower link 26b. In the raising/lowering link mechanism 26, a raising/lowering cylinder 27 of a raising/lowering device is coupled to the lower link 26b. In the raising/lowering device, the raising/lowering cylinder 27 is expanded and contracted to vertically raise and lower the planting device 24 with respect to the machine body 11.

The planting device 24 includes a seedling stand 28. The planting device 24 includes a planting input case portion 29, a plurality of planting units 30, and a plurality of floats 31. The planting device 24 sequentially supplies seedlings from the seedling stand 28 to each of the planting units 30 to continuously plant the seedlings.

Each of the planting units 30 includes a planting transmission case portion 32 and rotary case portions 33. Power is transmitted to the planting transmission case portion 32 via the PTO shaft 18 and the planting input case portion 29. The rotary case portions 33 are rotatably attached to the planting transmission case portion 32. The rotary case portions 33 are provided on both sides of the planting transmission case portion 32 in the left-right direction. Two planting claws 34 are attached on one side of each of the rotary case portions 33 in the left-right direction. The two planting claws 34 are arranged in the front-rear direction of the rice transplanter 1. The two planting claws 34 are displaced due to the rotation of the rotary case portions 33. The displacement of the two planting claws 34 enables one row of seedlings to be planted.

The seedling stand 28 is provided on the upper front side of the plurality of planting units 30. A seedling mat can be placed on the seedling stand 28. The seedling stand 28 enables seedlings of the seedling mat placed on the seedling stand to be supplied to each pair of planting claws 34 (the two planting claws 34 constitute each pair of planting claws). On the seedling stand 28, a predetermined number of seedling mats can be placed for each pair of planting claws 34 (i.e., for each row). The seedling stand 28 of the present embodiment is, as an example, a seedling stand for planting six rows of seedlings. On the seedling stand 28, a predetermined number of (e.g., two, etc.) seedling mats can be placed for each of six pairs of planting claws 34.

Specifically, the seedling stand 28 is laterally movable (i.e., slidable in the lateral direction) in a reciprocating manner in the left-right direction. In other words, the planting device 24 includes a seedling stand lateral feeding mechanism that laterally moves the seedling stand 28. Furthermore, the seedling stand 28 is capable of intermittently and longitudinally conveying the seedling mats downward at reciprocating movement ends to which the seedling stand 28 is moved in a reciprocating manner. In other words, the planting device 24 includes a seedling longitudinal feeding mechanism that longitudinally conveys the seedling mats on the seedling stand 28. The seedling stand lateral feeding mechanism and the seedling longitudinal feeding mechanism may have a known configuration.

The floats 31 are swingably provided in a lower portion of the planting device 24. The lower surface of the floats 31 is brought into contact with the field surface to stabilize the posture of the planting device 24 with respect to the field surface during planting.

In seedling planting work, during movement, a seedling of the seedling mats that is located near a seedling outlet (provided at the lower end of the seedling stand 28) is scraped by the planting claws 34 while the seedling stand 28 is laterally moved in the left-right direction by the seedling stand lateral feeding mechanism. Then, the scraped seedling is planted on the rice field surface (field surface) leveled by the floats 31. When the seedling stand 28 laterally moved by the seedling stand lateral feeding mechanism reaches one of the movement ends in the left-right direction, a seedling longitudinal feeding belt 35 (see FIG. 2) is actuated by the seedling longitudinal feeding mechanism, and conveys the seedling mats on the seedling stand 28 in a direction in which the seedlings are taken out (rearward and obliquely downward). When the seedling longitudinal feeding action by the seedling longitudinal feeding belt 35 is completed and the seedling longitudinal feeding belt 35 is stopped, the seedling stand 28 is laterally moved again by the seedling stand lateral feeding mechanism toward the movement end on the opposite side in the left-right direction. This action is repeatedly performed during seedling planting work.

The fertilizing device 25 is provided on the machine body frame 13 behind the driver's seat 19. That is, the rice transplanter 1 includes the fertilizing device 25 supported by the machine body 11. The fertilizing device 25 includes a plurality of fertilizing units (not shown) arranged in the left-right direction. The fertilizing device 25 includes a lid 25a that is openable and closable. When the lid 25a provided in an upper surface portion of a main body portion 25b is opened, the fertilizing units provided in the main body portion 25b are exposed. Each of the fertilizing units includes a hopper that stores granular fertilizer, a supply device that supplies a predetermined amount of granular fertilizer from the hopper, and a hose that communicates with a lower portion of the supply device at one end. The other end of each hose is extended to the side of a planting position for the corresponding row in the planting device 24. A fan 36 is provided on the left or right side of the fertilizing units, and air from the fan 36 is blown into the hose. The granular fertilizer supplied from the supply device by the air blown into the hose is conveyed to a position in the vicinity of the planting position, and is discharged to the field.

Spare seedling stands 37 are provided on the front side of the machine body 11. That is, the rice transplanter 1 includes the spare seedling stands 37 on which a spare seedling is placed. Specifically, the spare seedling stands 37 are provided in left and right portions on the front side of the machine body 11. Furthermore, a plurality of spare seedling stands 37 are provided in each of the left and right portions. The spare seedling stands 37 are provided outside the hood 15 in the left-right direction. A seedling box that stores a spare seedling mat can be placed on the spare seedling stands 37. When no seedling mat is left on the seedling stand 28, the worker transfers a seedling mat on the spare seedling stands 37 to the seedling stand 28.

Support frames 37a of the spare seedling stands 37 in the left and right portions are coupled together by a coupling frame 38 that extends in the up-down direction and the left-right direction. A housing 39 is provided in a center of the coupling frame 38 in the left-right direction. In the housing 39, a positioning antenna 40, an inertial measurement device 41, and a communication antenna 42 are provided.

The positioning antenna 40 receives a radio wave (positioning signal) from a positioning satellite constituting a satellite positioning system (global navigation satellite system (GNSS)). The inertial measurement device 41 includes a triaxial angular velocity sensor and a triaxial acceleration sensor. The communication antenna 42 is, for example, an antenna for performing wireless communication with a mobile communication terminal (not shown) that the worker can carry into or away from the rice transplanter 1. Wireless communication may be performed using wireless local area network (LAN) such as Wi-Fi (registered trademark), short-range wireless communication such as Bluetooth (registered trademark), or the like. The mobile communication terminal is not an essential component, and may not necessarily be included in the rice transplanter 1. That is, the communication antenna 42 is not an essential component, and may not necessarily be included in the rice transplanter 1. The rice transplanter 1 may include a mobile communication antenna for performing communication through a mobile-phone network and the Internet. The mobile communication terminal may be used as a mobile phone.

FIG. 3 is a block diagram illustrating a schematic configuration of the rice transplanter 1. In FIG. 3, components required to describe features of the embodiment are shown, and common components are omitted.

As shown in FIG. 3, the rice transplanter 1 includes the control unit 50. The control unit 50 performs various types of control of the entire action of the rice transplanter 1. In the present embodiment, the control unit 50 performs control related to autonomous travel.

The control unit 50 is, for example, a computer including a computing device, an input-output unit, and a storage unit 51. The computing device is a processor, a microprocessor, or the like. The storage unit 51 is a main storage device such as a read only memory (ROM) and a random access memory (RAM). The storage unit 51 may further include an auxiliary storage device such as a hard disk drive (HDD) or a solid state drive (SSD). The storage unit 51 stores various programs, data, and the like. The computing device reads various programs from the storage unit 51, and execute the programs.

Cooperation of the hardware and software allows the control unit 50 to act as a travel mode control unit 52, a travel control unit 53, a work device control unit 54, and a notification control unit 55. The control unit 50 may be composed of a single piece of hardware, or may be composed of a plurality of pieces of hardware that can communicate with each other.

As described above, the functional units 52 to 55 of the control unit 50 may be implemented by causing the computing device to execute a program, that is, implemented by software, or may be implemented by other methods. The functional units 52 to 55 may be implemented, for example, by using an application specific integrated circuit (ASIC), a field programmable gate array (FPGA), or the like. That is, the functional units 52 to 55 may be implemented by hardware using a dedicated IC or the like. The functional units 52 to 55 may be implemented by using software and hardware in combination. The functional units 52 to 55 are conceptual components. The function implemented by a single component may be distributed into a plurality of components. Furthermore, the functions of a plurality of components may be integrated into a single component.

The control unit 50 is electrically connected to a position acquisition unit 61, an autonomous travel operating unit 62, a steering actuator 63, a supply amount setting unit 64, a notification unit 65, and various sensors, in addition to the inertial measurement device 41. The various sensors include a vehicle speed sensor 71, a steering angle sensor 72, a planting clutch sensor 73, a remaining seedling amount detection sensor 74, a spare seedling sensor 75, a seating sensor 76, an armrest position detection sensor 77, and a lid sensor 78.

The position acquisition unit 61 acquires the position of the rice transplanter 1, for example, as latitude and longitude information, by using a positioning signal received from the positioning satellite by the positioning antenna 40. The position acquisition unit 61 may measure the position, for example, by receiving a positioning signal from a reference station (not shown) by an appropriate method and then using a known real time kinematic GNSS (RTK-GNSS) method. The reference station is located at a known position around the field. The position acquisition unit 61 may measure the position, for example, by using a differential GNSS (DGNSS) method. The position acquisition unit 61 may acquire the position, for example, based on the radio field intensity of a wireless LAN or the like, or by inertial navigation using a measurement result obtained by the inertial measurement device 41.

The autonomous travel operating unit 62 includes an operating unit that enables autonomous travel to be turned on and off. The operating unit may be composed of, for example, a button, a lever, a dial, a touch panel, or the like. In the present embodiment, the autonomous travel operating unit 62 is provided in the rice transplanter 1. However, the autonomous travel operating unit 62 may be provided in the mobile communication terminal described above. That is, the autonomous travel operating unit 62 may be provided to be operable at a position apart from the rice transplanter 1.

The steering actuator 63 enables automatic steering of the steering wheel 20. The steering actuator 63 may be, specifically, a motor (steering motor). The motor is coupled, via a gear mechanism (not shown), to a steering shaft (not shown) to which the steering wheel 20 is attached. The motor is a motor capable of controlling the rotation direction, rotation speed, rotation angle, and the like. When the rotation axis of the motor is rotated, power is transmitted via the gear mechanism, and thus the steering shaft is automatically rotated. That is, the motor enables automatic steering of the steering wheel 20.

The supply amount setting unit 64 is provided to set the amount of fertilizer to be supplied by the fertilizing device 25. That is, the fertilizing device 25 includes the supply amount setting unit 64 that sets the amount of fertilizer to be supplied. The supply amount setting unit 64 may be provided, for example, in or in the vicinity of the main body portion 25b constituting the fertilizing device 25. The supply amount setting unit 64 may be provided, for example, in or around the steering wheel 20.

The notification unit 65 is a unit that provides a notification to be provided to the worker, such as a warning, under control by the control unit 50. The notification unit 65 may be, for example, a sound generation unit such as a buzzer, a voice generation unit such as a speaker, a display unit such as a monitor, a light emitting unit such as a warning lamp, a communication unit that distributes emails or the like. The notification unit 65 may include at least one of these units.

The vehicle speed sensor 71 measures the vehicle speed of the rice transplanter 1. The vehicle speed sensor 71 is provided on the axle of the front wheels 14a, or the like. When the vehicle speed sensor 71 is provided on the axle of the front wheels 14a, the vehicle speed sensor 71 generates a pulse corresponding to the rotation of the axle of the front wheels 14a. A measurement result obtained by the vehicle speed sensor 71 is output to the control unit 50.

The steering angle sensor 72 measures the steering angle of the front wheels 14a. The steering angle sensor 72 is provided, for example, on a kingpin of the front wheels 14a. However, the steering angle sensor 72 may be provided on the steering wheel 20, or the like. A measurement result obtained by the steering angle sensor 72 is output to the control unit 50.

The planting clutch sensor 73 detects the position or operation of the planting clutch lever 23. A detection result obtained by the planting clutch sensor 73 is output to the control unit 50. The control unit 50 is capable of specifying, based on the detection result obtained by the planting clutch sensor 73, whether the planting device 24 is performing planting work. The control unit 50 may specify whether the planting device 24 is performing planting work, not based on the state of the planting clutch lever 23 but based on the state of other members (e.g., based on whether the PTO shaft 18 located downstream of the planting clutch is being rotated).

The remaining seedling amount detection sensor 74 detects the remaining seedling amount on the seedling stand 28. The remaining seedling amount detection sensor 74 may be a sensor that directly detects the remaining seedling amount, or a sensor that indirectly detects the remaining seedling amount. The remaining seedling amount detection sensor 74 outputs a detection result on the remaining seedling amount to the control unit 50. The remaining seedling amount may be expressed, for example, as the weight of seedlings, and in such a case, the remaining seedling amount detection sensor 74 may be a weight sensor. In the present embodiment, the seedling stand 28 is a seedling stand for planting a plurality of rows of seedlings. Thus, the remaining seedling amount detection sensor 74 is preferably capable of detecting the remaining seedling amount for each row. The rice transplanter 1 may include a plurality of remaining seedling amount detection sensors 74.

In the present embodiment, the remaining seedling amount detection sensor 74 is provided in the planting device 24. That is, the planting device 24 includes the remaining seedling amount detection sensor 74 that detects the remaining seedling amount on the seedling stand 28. The remaining seedling amount detection sensor 74 of the planting device 24 is composed of a sensor different from a weight sensor. The remaining seedling amount detection sensor 74 is composed of seedling detection sensors and an end-side movement detection sensor. A method of detecting the remaining seedling amount using the seedling detection sensors and the end-side movement detection sensor is described later.

The spare seedling sensor 75 detects the presence or absence of a seedling mat on the spare seedling stands 37. The spare seedling sensor 75 outputs a detection result on the seedling mat to the control unit 50. The spare seedling sensor 75 is provided in each of the spare seedling stands 37. That is, each of the spare seedling stands 37 includes the spare seedling sensor 75 that detects the presence or absence of a seedling mat on the stand. The spare seedling sensor 75 may be a mechanical switch that is switched on when a seedling mat is present and is switched off when no seedling mat is present. The spare seedling sensor 75 may be composed of, for example, a detection piece that is ejected and retracted from an opening on the spare seedling stands 37, and a switch main body in which switching of the contact is performed based on the ejection/retraction displacement of the detection piece.

The seating sensor 76 detects that the worker is sitting in the driver's seat 19. That is, the rice transplanter 1 includes the seating sensor 76 that detects that the worker is sitting in the driver's seat 19. The seating sensor 76 outputs a detection result on the seating to the control unit 50. The seating sensor 76 may include at least one of an image capturing device, a pressure-sensitive sensor, and an optical sensor. The optical sensor may detect, for example, a leg of the worker sitting in the driver's seat 19. The seating sensor 76 may be a physical switch, an ultrasonic sensor, or the like.

When the seating sensor 76 is an image capturing device, the image capturing device may be configured to capture a still image, or may be configured to capture a video. The image capturing device may be a camera fixed onto the rice transplanter 1, or may be a camera incorporated in a portable device (e.g., a mobile terminal such as a smartphone or a tablet terminal). The image capturing device may be placed to be able to capture an image of a certain area including the driver's seat 19. The rice transplanter 1 may be configured such that a detection that the worker is sitting in the driver's seat 19 is performed by comparing an image captured in advance by the image capturing device with the current image. Furthermore, the rice transplanter 1 may be configured such that a detection that the worker is sitting in the driver's seat 19 is performed in response to a detection that an object identified as a human is present in a predetermined range in an image captured by the image capturing device. When an image capturing device is used to detect that the worker is sitting in the driver's seat 19, erroneous detection is reduced as compared with the case of using a sensor that is easily affected by the environment such as temperature and luminous intensity. When the seating sensor 76 is an image capturing device, it is possible to detect that a person who has not been registered in advance is sitting in the driver's seat 19, thus preventing theft. When the rice transplanter 1 is configured to record a video captured by the image capturing device, the video can be used to determine the cause of an accident.

The armrest position detection sensor 77 detects the positions of the armrests 191 provided in the driver's seat 19. The armrest position detection sensor 77 outputs a detection result on the positions of the armrests 191 to the control unit 50. Details of the armrest position detection sensor 77 are described later.

The lid sensor 78 detects opening and closing of the lid 25a of the fertilizing device 25. The lid sensor 78 outputs a detection result on the opening and closing of the lid 25a to the control unit 50. The lid sensor 78 may be, for example, a physical switch. For example, the lid sensor 78 may be switched on when the lid 25a is opened and switched off when the lid 25a is closed.

The travel mode control unit 52 controls switching between a manual travel mode and an autonomous travel mode. Details of the control of switching are described later. The manual travel mode is a mode in which the worker sitting in the driver's seat 19 of the rice transplanter 1 drives the rice transplanter 1. The autonomous travel mode is a mode in which autonomous travel of the rice transplanter 1 is performed in a field. In the autonomous travel mode, for example, control of the operation of the steering wheel 20 is automatically performed, and control of the vehicle speed and control of the action of the work device 12 are manually performed by the worker sitting in the driver's seat 19. As another example, the rice transplanter 1 may be configured such that in the autonomous travel mode, work during straight travel, and turning travel are automatically performed while the worker is getting on the rice transplanter 1. In such a configuration, for example, the control of the vehicle speed and the control of the work device 12 may be switchable between automatic control and manual control.

When the travel mode is the manual travel mode, the travel control unit 53 controls the travel of the rice transplanter 1 according to a manual operation performed by the worker sitting in the driver's seat 19. When the travel mode is the autonomous travel mode, the travel control unit 53 performs automatic control for at least part of the traveling system of the rice transplanter 1. For example, the travel control unit 53 automatically controls steering so that the rice transplanter 1 travels along a predetermined route. When automatic steering is performed, the travel control unit 53 performs control to cause the current steering angle detected by the steering angle sensor 72 to be close to a target steering angle. The control of the steering angle is performed by controlling the driving of the steering actuator 63. When the vehicle speed is automatically controlled, the travel control unit 53 performs control to cause the current vehicle speed detected by the vehicle speed sensor 71 to be close to a target vehicle speed. The control of the vehicle speed is performed by changing at least one of the transmission gear ratio of the transmission device in the transmission case 17 and the rotation speed of the engine 16.

The travel control unit 53 performs control related to the engine 16. The control related to the engine 16 may include control for reducing the rotation speed of the engine 16 when a mobile phone (smartphone, etc.) of the worker getting on the rice transplanter 1 receives an incoming call during work using the rice transplanter 1. This can reduce the engine sound, allowing the worker to easily recognize that the mobile phone receives an incoming call. Furthermore, it is possible for the worker to easily catch the voice of a phone conversation partner. Furthermore, it is possible to reduce the inconvenience of manually operating the rotation of the engine 16. In order to achieve such control, the mobile phone and the control unit 50 are capable of wirelessly communicating with each other. The wireless communication may be performed using, for example, Bluetooth. The rice transplanter 1 may be configured such that the rotation speed of the engine 16 is automatically returned to the original rotation speed when the phone conversation on the mobile phone ends.

When the work device 12 is manually operated, the work device control unit 54 controls the planting device 24 according to a manual operation of an operating lever or the like provided in the rice transplanter 1. When the work device 12 is automatically operated, the work device control unit 54 automatically controls, for example, the raising and lowering of the planting device 24, or the like. Furthermore, the work device control unit 54 controls the fertilizing device 25 to supply fertilizer, according to a setting performed by the supply amount setting unit 64.

The notification control unit 55 controls the notification unit 65. The notification control unit 55 causes the notification unit 65 to perform a notification action when a predetermined condition is satisfied. The predetermined condition is satisfied, for example, when it is determined that the rice transplanter 1 is in a situation in which the worker needs to be warned. A detailed example of the predetermined condition is described later.

<2. Control related to travel mode>

[2-1. Manual travel mode -> Autonomous travel mode]

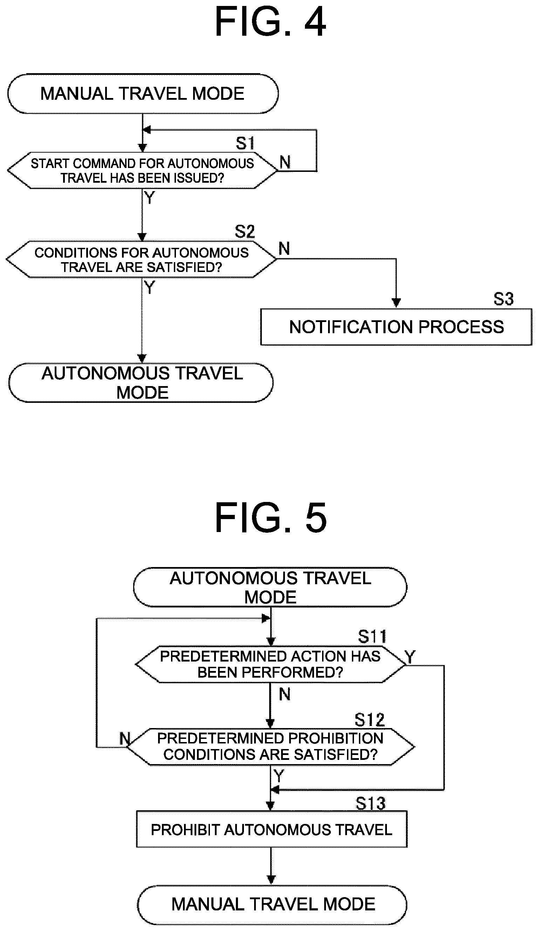

FIG. 4 is a flowchart showing an example of a shifting process from the manual travel mode to the autonomous travel mode of the rice transplanter 1 according to the embodiment of the present invention. The rice transplanter 1 is usually in the manual travel mode when the engine 16 is started.

In step S1, the control unit 50 (travel mode control unit 52) monitors whether a start command for the autonomous travel mode has been issued. In the present embodiment, a start command is issued by an operation of the autonomous travel operating unit 62 performed by the worker. In response to a determination that a start command has been issued (Yes in step S1), the process proceeds to next step S2. In response to a determination that no start command has been issued (No in step S1), the process in step S1 is continuously performed.

In step S2, the control unit 50 (travel mode control unit 52) determines whether conditions for starting autonomous travel are satisfied. Although a single condition for starting autonomous travel may be set, in the present embodiment, a plurality of conditions for starting autonomous travel are set. The conditions for starting autonomous travel include a condition in which a field route in which autonomous travel is performed is set. Furthermore, the conditions for starting autonomous travel include a condition in which the reception level of the positioning antenna 40 is good (at a predetermined level or higher).

In the present embodiment, the conditions for starting autonomous travel include a condition in which the detection result obtained by the armrest position detection sensor 77 satisfies a predetermined condition. The positions of the armrests 191 and control of the travel mode according to the positions of the armrests 191 are described later.

In addition, the conditions for starting autonomous travel may include a condition in which the worker is sitting in the driver's seat 19. That is, the control unit 50 (travel mode control unit 52) may set a condition in which the worker is sitting in the driver's seat 19 as a condition for starting autonomous travel. Such a configuration can prevent autonomous travel from being started while the worker getting on the rice transplanter 1 is not in the driver's seat 19, thus improving the safety of the rice transplanter 1. The control unit 50 can determine whether the worker is sitting in the driver's seat 19, based on information output from the seating sensor 76.

Furthermore, the conditions for starting autonomous travel may include a condition in which the supply amount setting unit 64 of the fertilizing device 25 is not being operated. That is, the control unit 50 (travel mode control unit 52) may set a condition in which the supply amount setting unit 64 is not being operated as a condition for starting autonomous travel. For example, when the supply amount setting unit 64 is provided in or in the vicinity of the main body portion 25b of the fertilizing device 25, the worker who operates the supply amount setting unit 64 is located at a position other than the driver's seat 19. When the control unit 50 sets a condition in which the supply amount setting unit 64 is not being operated as a condition for starting autonomous travel, it is possible to prevent autonomous travel from being started while the worker is located at a position other than the driver's seat 19, thus improving the safety of the rice transplanter 1. The worker here may include a person who gets on the rice transplanter 1 to assist work (hereinafter referred to as an auxiliary worker), other than a person who drives the rice transplanter 1. The control unit 50 may determine whether the supply amount setting unit 64 is not being operated, by monitoring variation in the supply amount setting value. For example, the control unit 50 may determine that the supply amount setting unit 64 is not being operated, in the case where the supply amount setting value is constant for a predetermined period.

Furthermore, the conditions for starting autonomous travel may include a condition in which the lid 25a of the fertilizing device 25 is closed. That is, the control unit 50 (travel mode control unit 52) may set a condition in which the lid 25a is in a closed state as a condition for starting autonomous travel. Such a configuration can prevent autonomous travel from being started, for example, while fertilizer is being added to the hopper of the fertilizing device 25 by the worker. That is, the configuration can improve the safety of the rice transplanter 1. The control unit 50 can determine whether the lid 25a is in the closed state, based on information output from the lid sensor 78.

In addition, the conditions for starting autonomous travel may include a condition in which the spare seedling sensor 75 has detected that a seedling mat is placed on the spare seedling stands 37.

In response to a determination that the conditions for starting autonomous travel are satisfied (Yes in step S2), the travel mode control unit 52 causes the travel mode to be shifted from the manual travel mode to the autonomous travel mode. Thus, autonomous travel is started. On the other hand, in response to a determination that the conditions for starting autonomous travel are not satisfied (No in step S2), the process proceeds to step S3.

In step S3, the control unit 50 (notification control unit 55) notifies the worker that autonomous travel cannot be started, by using the notification unit 65. At this time, the notification unit 65 preferably notifies the worker of the reason that autonomous travel cannot be started. This allows the worker to quickly understand how to address the situation to start autonomous travel.

[2-2. Autonomous travel mode -> Manual travel mode]

FIG. 5 is a flowchart showing an example of a shifting process from the autonomous travel mode to the manual travel mode of the rice transplanter 1 according to the embodiment of the present invention. At the start of the process in FIG. 5, the rice transplanter 1 is performing autonomous travel, and the travel mode is the autonomous travel mode.

In step S11, the control unit 50 (travel mode control unit 52) monitors whether a predetermined action has been performed by the worker. The monitoring is performed, for example, in a constant cycle. A single type of predetermined action or a plurality of types of predetermined actions may be to be monitored by the control unit 50. In the case where a plurality of types of predetermined actions are to be monitored by the control unit 50, the control unit 50 detects that a predetermined action has been performed by the worker when any one of the plurality of types of predetermined actions is performed by the worker. The worker here may include an auxiliary worker as described above, other than a person who drives the rice transplanter 1.

In the present embodiment, the predetermined actions include an action in which the autonomous travel operating unit 62 is operated by the worker to issue a command for canceling the autonomous travel state. Furthermore, the predetermined actions include an action in which the engine 16 is stopped by the worker. Furthermore, the predetermined actions include an action in which the steering wheel 20 is operated by the worker on the machine body 11. Furthermore, the predetermined actions include an action in which the main transmission lever 22 is moved to the "high speed" (moving speed) position or the "backward movement" position by the worker on the machine body 11. Furthermore, the predetermined actions include a first action that is performed with respect to the armrests 191 by the worker on the machine body 11. The first action and control of the autonomous travel performed due to the first action are described later.

In addition, the predetermined actions may include a second action that is performed with respect to the fertilizing device 25 by the worker on the machine body 11. The worker here may include an auxiliary worker as described above, other than a person who drives the rice transplanter 1. The second action may include an action in which the supply amount setting unit 64 is operated by the worker. The control unit 50 can detect whether the supply amount setting unit 64 is operated, by monitoring variation in the setting value. Furthermore, the second action may include an action in which the lid 25a is changed from the closed state to the open state by the worker. The control unit 50 can detect whether the lid 25a has been changed from the closed state to the open state, by using the lid sensor 78. The second action may include an action in which fertilizer is added to the hopper of the fertilizing device 25. The control unit 50 can detect whether fertilizer is added to the hopper, for example, by monitoring the weight of fertilizer in the hopper. That is, the control unit 50 may detect an action in which fertilizer is added to the hopper, in the case where the weight of fertilizer in the hopper is increased.

Furthermore, the predetermined actions may include an action in which the worker is changed from a seating state in which the worker is sitting in the driver's seat 19 to a non-seating state in which the worker is not sitting in the driver's seat 19. The control unit 50 can detect whether the worker has been changed from the seating state to the non-seating state, by using the seating sensor 76.

Furthermore, the predetermined actions may include a third action that is performed with respect to the spare seedling stands 37 by the worker on the machine body 11. The worker here may include an auxiliary worker as described above, other than a person who drives the rice transplanter 1. The third action may include an action in which a seedling mat is taken out from the spare seedling stands 37 by the worker. The control unit 50 can detect whether a seedling mat is taken out from the spare seedling stands 37 by the worker, by using the spare seedling sensor 75.

In response to a detection of a predetermined action performed by the worker (Yes in step S 11), the process proceeds to step S13. On the other hand, in response to no detection of a predetermined action performed by the worker (No in step S11), the process proceeds to step S12.

In step S12, the control unit 50 (travel mode control unit 52) determines whether predetermined prohibition conditions are satisfied. The predetermined prohibition conditions are conditions that are set in advance, as conditions under which autonomous travel is to be prohibited, separately from the predetermined actions performed by the worker described above. Although a single predetermined prohibition condition may be set, in the present embodiment, a plurality of predetermined prohibition conditions are set. When any one of the plurality of prohibition conditions is satisfied, the control unit 50 determines that the predetermined prohibition conditions are satisfied.

In the present embodiment, the predetermined prohibition conditions include a condition in which the travel route of the rice transplanter 1 is deviated by a predetermined distance (e.g., 60 cm) or more from the route set in advance. Furthermore, the predetermined prohibition conditions include a condition in which the reception level of the positioning antenna 40 is low (at a predetermined level or lower). Furthermore, the predetermined prohibition conditions include a condition in which the machine body 11 is greatly tilted forward, rearward, leftward, or rightward (tilted forward, rearward, leftward, or rightward by a threshold value or more). Furthermore, the predetermined prohibition conditions include a condition in which the remaining seedling amount on the seedling stand 28 is equal to or less than a predetermined amount. A method of determining that the remaining seedling amount is equal to or less than a predetermined amount is described later.

In response to a determination that the predetermined prohibition conditions are satisfied (Yes in step S12), the process proceeds to step S13. On the other hand, in response to a determination that the predetermined prohibition conditions are not satisfied (No in step S12), the process returns to step S11.

In step 13, the control unit 50 (travel mode control unit 52) performs a process of prohibiting autonomous travel. The process of prohibiting autonomous travel may be either a process (first process) in which the travel mode is switched from the autonomous travel mode to the manual travel mode while the travel of the rice transplanter 1 is continuously performed, or a process (second process) in which the travel of the rice transplanter 1 is stopped and the travel mode is switched from the autonomous travel mode to the manual travel mode. The control unit 50 may select the first process or the second process depending on the reason that autonomous travel has been prohibited. When autonomous travel is prohibited from the viewpoint of safety, the control unit 50 preferably performs the second process. Hereinafter, stopping of the travel of the rice transplanter 1 by the second process is referred to as stopping of autonomous travel.

As can be seen from the above, in the present embodiment, the control unit 50 prohibits autonomous travel in response to a detection of the first action performed with respect to the armrests 191 by the worker on the machine body 11. Such a configuration enables the worker sitting in the driver's seat 19 to stop autonomous travel by performing an action with respect to the armrests 191 on which the worker is highly likely to place their arms during autonomous travel. This allows the worker to quickly stop the autonomous travel. That is, the configuration can improve the safety of the rice transplanter 1. A detailed example of the first action is described later.

In the present embodiment, the control unit 50 prohibits autonomous travel in response to a determination that the remaining seedling amount on the seedling stand 28 is equal to or less than a predetermined amount. Such a configuration makes it possible to stop autonomous travel before the seedlings on the seedling stand 28 run out. A detailed example of the method of controlling the travel mode according to the remaining seedling amount is described later.

Furthermore, the control unit 50 may prohibit autonomous travel in response to a detection of the second action performed with respect to the fertilizing device 25 by the worker on the machine body 11. Such a configuration can prevent autonomous travel from being continuously performed while the worker (an auxiliary worker may be included) is performing an action with respect to the fertilizing device 25. That is, the configuration can improve the safety of the rice transplanter 1. Specifically, the control unit 50 may stop autonomous travel in response to a detection that the supply amount setting unit 64 is being operated by the worker. When, after the autonomous travel is stopped, the control unit 50 detects that the supply amount setting unit 64 is not being operated and the other conditions for starting autonomous travel are satisfied, the autonomous travel may be resumed. Furthermore, the control unit 50 may stop autonomous travel in response to a detection that the lid 25a has been changed from the closed state to the open state by the worker. When, after the autonomous travel is stopped, the control unit 50 detects that the lid 25a is in the closed state and the other conditions for starting autonomous travel are satisfied, the autonomous travel may be resumed. Furthermore, the control unit 50 may stop autonomous travel in response to a detection that fertilizer is being added to the hopper by the worker. When, after the autonomous travel is stopped, the control unit 50 detects that fertilizer is not being added to the hopper and the other conditions for starting autonomous travel are satisfied, the autonomous travel may be resumed.

Furthermore, the control unit 50 may prohibit autonomous travel in response to a detection that the worker on the machine body 11 has been changed from the seating state to the non-seating state in the driver's seat 19. Such a configuration makes it possible to stop autonomous travel when the worker (an auxiliary worker may be included) is not sitting in the driver's seat 19. That is, the configuration can improve the safety of the rice transplanter 1. When, after the autonomous travel is stopped, the control unit 50 detects that the worker is in the seating state in the driver's seat 19 and the other conditions for starting autonomous travel are satisfied, the autonomous travel may be resumed.

Furthermore, the control unit 50 may prohibit autonomous travel in response to a detection of the third action performed with respect to the spare seedling stands 37 by the worker on the machine body 11. Such a configuration can prevent autonomous travel from being continuously performed while the worker (an auxiliary worker may be included) is highly likely not to be in the driver's seat 19. That is, the configuration can improve the safety of the rice transplanter 1. Specifically, the control unit 50 may stop autonomous travel in response to a detection of an action in which a seedling mat is being taken out from the spare seedling stands 37 by the worker. When, after a seedling mat is taken out from the spare seedling stands 37, the control unit 50 detects that a seedling mat is placed on the spare seedling stands 37 and the other conditions for starting autonomous travel are satisfied, the autonomous travel may be resumed.

<3. Details of control related to armrests>

[3-1. Configuration of armrests]

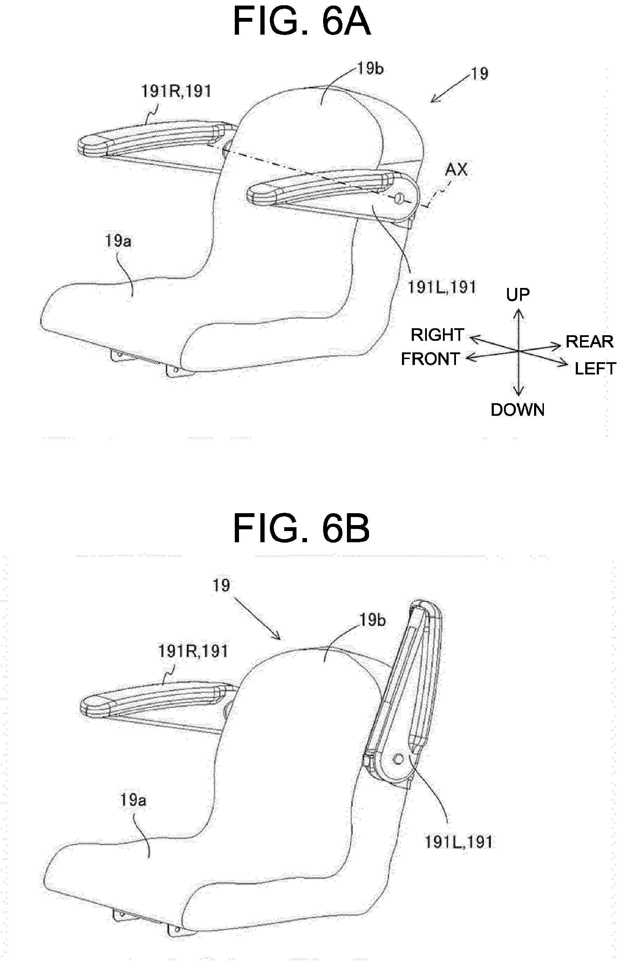

FIGS. 6A and 6B are each a diagram illustrating a configuration of the armrests 191 according to the embodiment of the present invention. FIGS. 6A and 6B show different postures of the armrests 191.

As shown in FIGS. 6A and 6B, the driver's seat 19 includes a seat 19a and a backrest portion 19b. The seat 19a is a portion on which the worker's buttocks are placed. The backrest portion 19b is a portion that is used as a backrest by the worker. The driver's seat 19 includes a pair of left and right armrests 191. The armrests 191 have a bar shape, and allow the worker sitting in the driver's seat 19 to place their arms on the armrests 191.

The pair of armrests 191 are attached to the driver's seat 19 left-right symmetrically with respect to the driver's seat 19. A left armrest 191L that is provided on the left side of the driver's seat 19 is attached to a left side surface of the backrest portion 19b. Specifically, one end portion of the left armrest 191L in the longitudinal direction is attached to the left side surface of the backrest portion 19b so that the left armrest 191L is rotatable about an axis AX extending in the left-right direction. A right armrest 191R that is provided on the right side of the driver's seat 19 is attached to a right side surface of the backrest portion 19b. Specifically, one end portion of the right armrest 191R in the longitudinal direction is attached to the right side surface of the backrest portion 19b so that the right armrest 191R is rotatable about the axis AX extending in the left-right direction.

The left armrest 191L and the right armrest 191R are used in such postures so that the longitudinal direction of the left armrest 191L and the right armrest 191R corresponds to the front-rear direction. That is, FIG. 6A shows a state in which the left armrest 191L and the right armrest 191R are in a use position. The left armrest 191L and the right armrest 191R are arranged symmetrically with respect to the driver's seat 19 while the left armrest 191L and the right armrest 191R are in the use position.

In the present embodiment, the armrests 191 are in the use position when a tip portion (the other end portion in the longitudinal direction) of the armrests 191 is lowered to the lowest position. The left armrest 191L and the right armrest 191R are not rotatable downward from the use position shown in FIG. 6A. When the left armrest 191L and the right armrest 191R are rotated upward from the use position, the left armrest 191L and the right armrest 191R are in a non-use position. In the present embodiment, the armrests 191 are rotatable upward by approximately 90° from the use position. FIG. 6B shows a state in which the left armrest 191L is rotated upward by approximately 90° from the use position. In FIG. 6B, the left armrest 191L is in such posture that is raised upward, and the longitudinal direction of the left armrest 191L corresponds to the up-down direction.

As can be seen from the above, the postures of the armrests 191 of the present embodiment are changeable between the use position and the non-use position. In the present embodiment, the rice transplanter 1 is configured such that the postures of the left armrest 191L and the right armrest 191R are changeable between the use position and the non-use position; however, this is for illustrative purpose only. The rice transplanter 1 may be configured such that only one of the postures of the left armrest 191L and the right armrest 191R is changeable between the use position and the non-use position.

When the armrests 191 are in the use position, the worker sitting in the driver's seat 19 can hold the armrests 191. Thus, during autonomous travel in which the worker cannot hold the steering wheel 20, the worker can hold the armrests 191 to have a stable posture. By raising the armrests 191 from the use position, the worker can easily move from the driver's seat 19 without being interfered with by the armrests 191.

[3-2. Armrest position detection sensor]

The armrest position detection sensor 77 (see FIG. 3) is capable of detecting whether the armrests 191 are in the use position or in the non-use position. The armrest position detection sensor 77 may be composed of, for example, a potentiometer. Alternatively, the armrest position detection sensor 77 may be composed of a limit switch. The armrest position detection sensor 77 composed of a limit switch may be configured such that, for example, the limit switch is turned on when the armrests 191 are in the use position and the limit switch is turned off when the armrests 191 are rotated from the use position to the non-use position.

[3-3. Control of travel mode]

As described above, the control unit 50 prohibits autonomous travel in response to a detection of the first action performed with respect to the armrests 191 by the worker on the machine body 11. Specifically, the first action includes an action in which the positions of the armrests 191 are changed from the use position to the non-use position by the worker. Such a configuration can prevent autonomous travel from being performed while the worker cannot tightly hold the armrests 191. That is, the configuration can improve the safety of the rice transplanter 1. The control unit 50 detects whether the armrests 191 are in the use position or the non-use position, by using the armrest position detection sensor 77.

In the present embodiment, the control unit 50 sets a condition in which the armrests 191 are in the use position as a condition for starting autonomous travel. This can prevent autonomous travel from being performed while the worker cannot tightly hold the armrests 191. That is, the configuration can improve the safety of the rice transplanter 1.

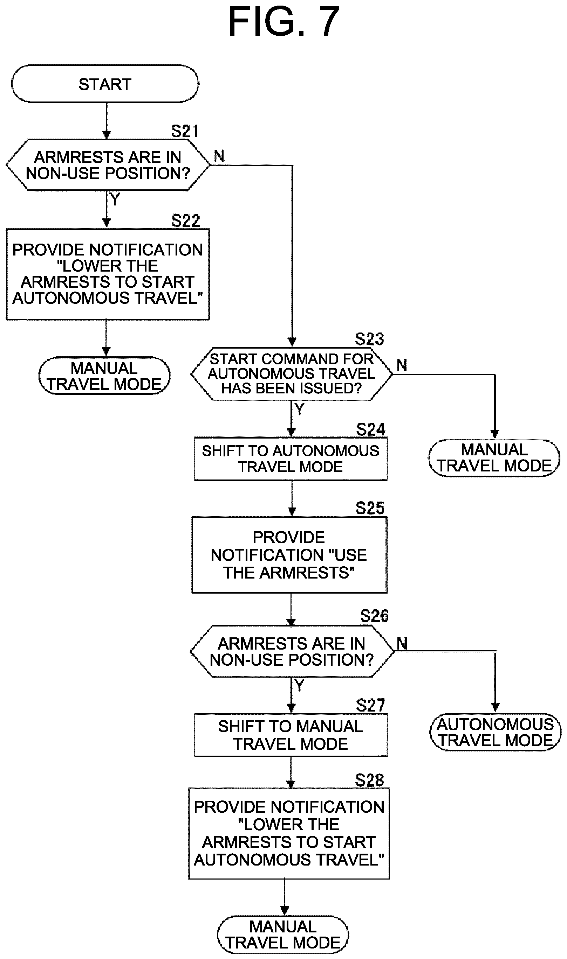

FIG. 7 is a flowchart showing an example of the control of the travel mode related to the armrests 191 of the rice transplanter 1. The process shown in FIG. 7 is performed assuming that the conditions for starting autonomous travel are satisfied except for the condition related to the armrests 191. At the start of the process shown in FIG. 7, the travel mode is the manual travel mode. The example shown in FIG. 7 is a modification different from the example shown in FIG. 4.

In step S21, the control unit 50 (travel mode control unit 52) determines whether the armrests 191 are in the non-use position. The determination is performed by using the armrest position detection sensor 77. The non-use position may include various positions of the armrests 191 in a state in which the armrests 191 are not in the use position, and may be, for example, a state in which the armrests 191 are raised. In the case where the positions of the left armrest 191L and the right armrest 191R are changeable between the use position and the non-use position, when one of the left armrest 191L and the right armrest 191R is in the non-use position, the control unit 50 determines that the armrests 191 are in the non-use position. In response to a determination that the armrests 191 are in the non-use position (Yes in step S21), the process proceeds to next step S22. In response to a determination that the armrests 191 are in the use position (No in step S21), the process proceeds to step S23.

In step S22, the control unit 50 (notification control unit 55) causes the notification unit 65 to provide a notification "Lower the armrests to start autonomous travel". That is, the control unit 50 performs a process of notifying the worker that the postures of the armrests 191 are inappropriate and thus autonomous travel cannot be started. When the process in step S22 is performed, the manual travel mode is maintained.

In step S23, the control unit 50 (travel mode control unit 52) determines whether a start command for autonomous travel has been issued. A start command for autonomous travel is issued by an operation of the autonomous travel operating unit 62 performed by the worker. In response to a determination that a start command for autonomous travel has been issued (Yes in step S23), the process proceeds to next step S24. In response to a determination that no start command for autonomous travel has been issued (No in step S23), the manual travel mode is maintained.

In step S24, the control unit 50 (travel mode control unit 52) causes the travel mode to be shifted from the manual travel mode to the autonomous travel mode. Thus, autonomous travel is started. When the travel mode is shifted to the autonomous travel mode, the process proceeds to next step S25.

In step S25, the control unit 50 (notification control unit 55) causes the notification unit 65 to provide a notification "Use the armrests". That is, the control unit 50 notifies the worker of a recommended posture during autonomous travel. This can increase the probability that the worker holds the armrests 191. When the notification process is completed or in parallel with the notification process, the process in step S26 is performed.

In step S26, the control unit 50 (travel mode control unit 52) monitors whether the postures of the armrests 191 have been changed to the non-use position. In response to a determination that the positions of the armrests 191 have been changed to the non-use position (Yes in step S26), the process proceeds to next step S27. In response to a determination that the armrests 191 remain in the use position (No in step S26), the autonomous travel mode is maintained. That is, the autonomous travel is continuously performed.

In step S27, the control unit 50 (travel mode control unit 52) stops the autonomous travel and causes the travel mode to be shifted from the autonomous travel mode to the manual travel mode. When the travel mode is shifted to the manual travel mode, the process proceeds to next step S28.

In step S28, the control unit 50 (notification control unit 55) causes the notification unit 65 to provide a notification "Lower the armrests to start autonomous travel". That is, the control unit 50 performs a process of notifying the worker of an action required to start autonomous travel. When the process in step S28 is performed, the manual travel mode is maintained.

When, after the process in step S28, the control unit 50 detects that the postures of the armrests 191 have been changed from the non-use position to the use position, the autonomous travel may be resumed. At this time, an operation of the autonomous travel operating unit 62 may be a requirement for the rice transplanter 1 to resume the autonomous travel.

[3-4. Modification of configuration of armrests]

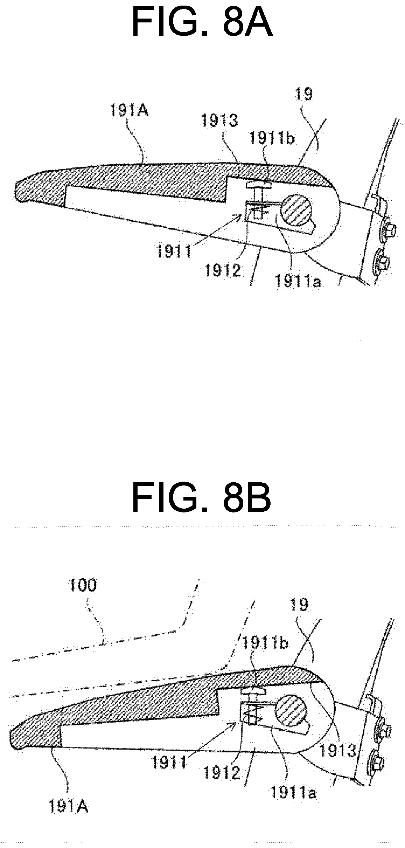

FIGS. 8A and 8B are each a diagram illustrating a configuration of an armrest 191A according to a modification. FIGS. 8A and 8B are each a vertical cross-sectional view of the armrest 191A. The armrest 191A shown in FIGS. 8A and 8B is an armrest that is provided on the left side of the driver's seat 19. An armrest that is provided on the right side of the driver's seat 19 may have a configuration similar to that of the armrest provided on the left side of the driver's seat 19. Also in the modification, the armrest 191A is rotatable about the axis extending in the left-right direction, and the position of the armrest 191A is changeable between the horizontal posture shown in FIG. 6A and the vertical posture shown in FIG. 6B.

In the armrest 191A, a switch 1911 and a biasing member 1912 are provided. The switch 1911 includes a base portion 1911a and a movable portion 1911b. The base portion 1911a is fixed to the driver's seat 19. The movable portion 1911b is movable upward and downward with respect to the base portion 1911a. When the movable portion 1911b is lowered downward, the switch 1911 is turned on. The switch 1911 is an example of the armrest position detection sensor 77, and is capable of detecting the use position and the non-use position of the armrest 191A. The biasing member 1912 is, for example, a compression spring. An upper portion of the biasing member 1912 is attached to the base portion 1911a, and a lower portion of the biasing member 1912 is attached to the movable portion 1911b. The biasing member 1912 biases the movable portion 1911b upward.

The armrest 191A in the posture shown in FIG. 8A is obtained when the armrest 191A in the vertical posture is tilted downward. When the armrest 191A is in the position shown in FIG. 8A, an inner wall surface 1913 of the armrest 191A is in contact with the movable portion 1911b. However, the position of the movable portion 1911b is maintained by a biasing force of the biasing member 1912. That is, the switch 1911 is not turned on. In other words, the armrest 191A is supported by the movable portion 1911b biased upward by the biasing member 1912, and is located at a position higher than the lower limit position.

When a worker's arm 100 is placed on the armrest 191A in the position shown in FIG. 8A, a load is applied downward to the armrest 191A. This causes the armrest 191A to be lowered to the lower limit position. Furthermore, the movable portion 1911b of the switch 1911 is lowered, and the switch 1911 is turned on. When the switch 1911 is turned on, the control unit 50 detects that the armrest 191A is in the use position. When the load is no longer applied downward to the armrest 191A, the armrest 191A is raised (the armrest 191A is returned to the position shown in FIG. 8A) together with the movable portion 1911b by a biasing force of the biasing member 1912. This causes the switch 1911 to be turned off. When the switch 1911 is turned off, the control unit 50 detects that the armrest 191A is in the non-use position.

As can be seen from the above, the rice transplanter 1 of the modification includes the biasing member 1912 that biases the armrest 191A in the use position to the non-use position. In the configuration of the modification, when the armrest 191A in the vertical posture (the raised armrest 191A) is unintentionally tilted downward, the armrest position detection sensor 77 does not detect that the armrest 191A is in the use position. That is, it is possible to prevent the armrest position detection sensor 77 from detecting that the armrest 191A that is not actually in use is in the use position. Furthermore, the worker can easily change the position of the armrest 191A to the non-use position by simply removing, from the armrest 191A, the arm 100 placed on the armrest 191A. That is, the worker can quickly stop autonomous travel by using the armrest 191A.

<4. Details of control of travel mode using remaining seedling amount detection sensor>

The following describes an example of the control of the travel mode in the case where the remaining seedling amount detection sensor 74 is composed of seedling detection sensors and an end-side movement detection sensor provided in the seedling stand 28. The seedling detection sensors are sensors that detect the presence or absence of a seedling at a position closer to a lower portion of an intermediate portion of the seedling stand 28 in the longitudinal direction. A seedling detection sensor is provided in each of regions on the seedling stand 28 in which the corresponding row of seedlings are placed. In the present embodiment, the rice transplanter 1 is a machine for planting six rows of seedlings, and thus includes six seedling detection sensors. The seedling detection sensors are each composed of, for example, a mechanical switch. The end-side movement detection sensor is a mechanical sensor that is switched on when the seedling stand 28 reaches the movement end on the left or right side.

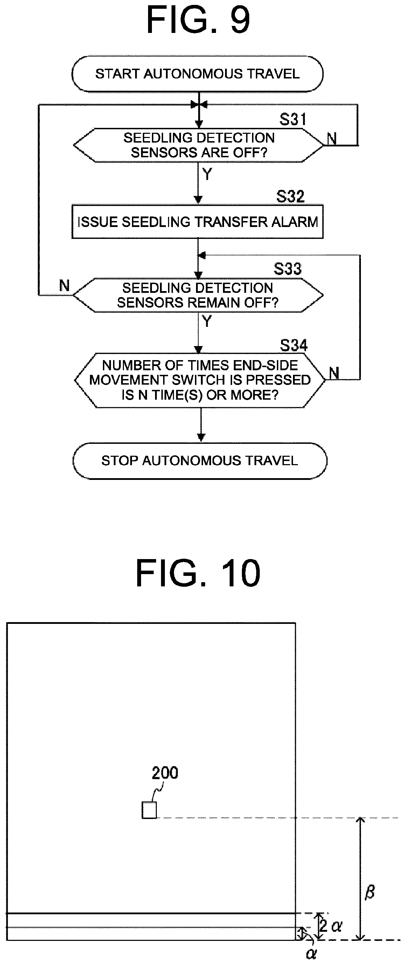

FIG. 9 is a flowchart showing an example of the control of the travel mode using the remaining seedling amount detection sensor 74. In FIG. 9, the rice transplanter 1 is assumed to be performing autonomous travel at the start of the flow.

In step S31, the control unit 50 (travel mode control unit 52) determines whether the seedling detection sensors are off. Each of the seedling detection sensors is turned off when no seedling is present at the position of the corresponding sensor (switch), and is turned on when a seedling is present at the position of the corresponding sensor (switch). For example, the seedling detection sensors are turned off when the length in the longitudinal direction of the seedling mats placed on the seedling stand 28 becomes 510 mm or less. In response to a determination that the seedling detection sensors are off (Yes in step S31), the process proceeds to next step S32. In response to a determination that the seedling detection sensors are on (No in step S31), the process in step S31 is repeatedly performed.

In step S32, the control unit 50 (notification control unit 55) causes the notification unit 65 to issue a seedling transfer alarm. When the seedling transfer alarm is issued, the process proceeds to next step S33.

In step S33, the control unit 50 (travel mode control unit 52) determines whether the seedling detection sensors remain off. In response to a determination that the seedling detection sensors remain off (Yes in step S33), the process proceeds to next step S34. In response to a determination that the seedling detection sensors are on (No in step S33), the process returns to step S31.

In step S34, the control unit 50 (travel mode control unit 52) determines whether the number of times a switch constituting the end-side movement detection sensor (hereinafter referred to as an end-side movement switch) is pressed is N time(s) or more. N time(s) is a predetermined number of times. A method of determining N time(s) is described with reference to FIG. 10. FIG. 10 is a diagram illustrating the method of determining "N time(s)" in FIG. 9. FIG. 10 is a diagram illustrating a portion (a region in which one row of seedlings are placed) of the seedling stand 28. In FIG. 10, reference sign 200 indicates one of the seedling detection sensors.

If autonomous travel is performed while no seedling is placed on the seedling stand 28, no seedling is planted in a section of the field.

In order to prevent the occurrence of such a section, in the present example, the autonomous travel is stopped at a time point when the remaining seedling amount reaches the seedling amount for a single reciprocating lateral feeding of the seedling stand 28. In this case, N is the number of times the end-side movement switch is required to be pressed until the seedling detection sensor 200 is turned off and then the remaining seedling amount reaches the seedling amount for a single reciprocating lateral feeding. In FIG. 10, $\alpha$ indicates the longitudinally conveyed seedling amount. The longitudinally conveyed seedling amount is the length of the seedlings in the longitudinal direction that are conveyed in a direction in which the seedlings are taken out, by a seedling longitudinal feeding action performed by the seedling longitudinal feeding belt 35 (see FIG. 2). In FIG. 10, $\beta$ indicates the length of the seedling mats in the longitudinal direction at a time point when the seedling detection sensor 200 is turned off. As described above, $\beta$ is, for example, 510 mm. The end-side movement switch is provided at a single position on one side of the seedling stand 28 in the left-right direction; thus, the end-side movement switch is pressed once for each single reciprocating lateral feeding. Thus, N is derived as follows.

$$\alpha \times 2 \times N = \beta - \alpha \times 2$$

$$N = (\beta - 2\alpha)/2\alpha$$

An end-side movement number counter is set for an internal variable. The end-side movement number counter is set to zero when the seedling detection sensor 200 is on. When the seedling detection sensor is turned off, the end-side movement number counter starts being incremented, and is incremented by one each time the end-side movement switch is pressed. The end-side movement number counter counts the number of times the end-side movement switch is pressed. In response to a determination that the number of times the end-side movement switch is pressed is N time(s) or more (Yes in step S34), the control unit 50 determines that the remaining seedling amount is significantly small, and thus the autonomous travel is stopped. On the other hand, in response to a determination that the number of times the end-side movement switch is pressed is less than N time(s) (No in step S34), the control unit 50 determines that the remaining seedling amount is sufficient, and thus the process returns to step S33.

When, after the autonomous travel is stopped, the control unit 50 detects that the seedling detection sensor 200 is on, the autonomous travel may be resumed. However, in order to prevent autonomous travel from being suddenly started, the autonomous travel is preferably resumed when the seedling detection sensor 200 is on and the autonomous travel operating unit 62 is operated.

<5. Notes, etc.>

Various technical features disclosed in the present specification can be changed in various ways without departing from the spirit of the technical creation thereof. In addition, the multiple embodiments and modifications described in the present specification may be combined to the extent possible.

The present invention is also applicable, for example, to a rice transplanter that is driven by a drive source different from the engine.

<6. Appendices>

An exemplary field work machine of the present invention may be a field work machine capable of performing autonomous travel in a field, the field work machine including: a driver's seat that is provided on a machine body; an armrest that is provided in the driver's seat; and a control unit that performs control related to the autonomous travel, wherein the control unit prohibits the autonomous travel in response to a detection of a first action that is performed with respect to the armrest by a worker on the machine body (first configuration).

The field work machine having the first configuration may be configured such that a posture of the armrest is changeable between a use position and a non-use position, and the first action includes an action in which the position of the armrest is changed from the use position to the non-use position by the worker (second configuration).

The field work machine having the first or second configuration may be configured to include a fertilizing device that is supported by the machine body, wherein the control unit prohibits the autonomous travel in response to a detection of a second action that is performed with respect to the fertilizing device by the worker (third configuration).

The field work machine having the third configuration may be configured such that the fertilizing device includes a supply amount setting unit that sets an amount of fertilizer to be supplied, and the second action includes an action in which the supply amount setting unit is operated by the worker (fourth configuration).

The field work machine having the third or fourth configuration may be configured such that the fertilizing device includes a lid that is openable and closable, and the second action includes an action in which the lid is changed from a closed state to an open state by the worker (fifth configuration).

The field work machine having any one of the first to fifth configurations may be configured to include a seating sensor that detects that the worker is sitting in the driver's seat, wherein the control unit prohibits the autonomous travel in response to a detection that the worker has been changed from a seating state in which the worker is sitting in the driver's seat to a non-seating state in which the worker is not sitting in the driver's seat (sixth configuration).

The field work machine having the sixth configuration may be configured such that the seating sensor includes at least one of an image capturing device, a pressure-sensitive sensor, and an optical sensor (seventh configuration).

The field work machine having any one of the first to seventh configurations may be configured to include a spare seedling stand on which a spare seedling is placed, wherein the control unit prohibits the autonomous travel in response to a detection of a third action that is performed with respect to the spare seedling stand by the worker (eighth configuration).

The field work machine having the eighth configuration may be configured such that the spare seedling stand includes a spare seedling sensor that detects presence or absence of a seedling mat on the stand, and the third action includes an action in which the seedling mat is taken out from the spare seedling stand by the worker (ninth configuration).

The field work machine having any one of the first to ninth configurations may be configured to include a planting device including a seedling stand, wherein the planting device includes a remaining seedling amount detection sensor that detects a remaining seedling amount on the seedling stand, and the control unit prohibits the autonomous travel in response to a determination that the remaining seedling amount on the seedling stand is equal to or less than a predetermined amount (tenth configuration).

The field work machine having the second configuration may be configured such that the control unit sets a condition in which the armrest is in the use position as a condition for starting the autonomous travel (eleventh configuration).

The field work machine having the eleventh configuration may be configured to include a biasing member that biases the armrest in the use position to the non-use position (twelfth configuration).

The field work machine having the fourth configuration may be configured such that the control unit sets a condition in which the supply amount setting unit is not being operated as a condition for starting the autonomous travel (thirteenth configuration).

The field work machine having the fifth configuration may be configured such that the control unit sets a condition in which the lid is in the closed state as a condition for starting the autonomous travel (fourteenth configuration).

The field work machine having the sixth or seventh configuration may be configured such that the control unit sets a condition in which the worker is sitting in the driver's seat as a condition for starting the autonomous travel (fifteenth configuration).

REFERENCE SIGNS LIST

| | |
|---|---|
| 1 | Rice transplanter (field work machine) |
| 11 | Machine body |
| 19 | Driver's seat |
| 24 | Planting device |
| 25 | Fertilizing device |
| 25a | Lid |
| 28 | Seedling stand |
| 37 | Spare seedling stand |
| 50 | Control unit |
| 64 | Supply amount setting unit |
| 74 | Remaining seedling amount detection sensor |
| 75 | Spare seedling sensor |
| 76 | Seating sensor |
| 191, 191A | Armrest |
| 191L | Left armrest |
| 191R | Right armrest |
| 1912 | Biasing member |

**Claims**

1. A field work machine capable of performing autonomous travel in a field, the field work machine comprising:

    a driver's seat that is provided on a machine body;
    an armrest that is provided in the driver's seat; and
    a control unit that performs control related to the autonomous travel, wherein
    the control unit prohibits the autonomous travel in response to a detection of a first action that is performed with respect to the armrest by a worker on the machine body.

2. The field work machine according to claim 1, wherein

    a posture of the armrest is changeable between a use position and a non-use position, and
    the first action includes an action in which the posture of the armrest is changed from the use position to the non-use position by the worker.

3. The field work machine according to claim 1 or 2, comprising a fertilizing device that is supported by the machine body, wherein
the control unit prohibits the autonomous travel in response to a detection of a second action that is performed with respect to the fertilizing device by the worker.

4. The field work machine according to claim 3, wherein

   the fertilizing device includes a supply amount setting unit that sets an amount of fertilizer to be supplied, and
   the second action includes an action in which the supply amount setting unit is operated by the worker.

5. The field work machine according to claim 3, wherein

   the fertilizing device includes a lid that is openable and closable, and
   the second action includes an action in which the lid is changed from a closed state to an open state by the worker.

6. The field work machine according to claim 1 or 2, comprising a seating sensor that detects that the worker is sitting in the driver's seat, wherein
   the control unit prohibits the autonomous travel in response to a detection that the worker has entered a non-seating state in which the worker is not sitting in the driver's seat from a seating state in which the worker is sitting in the driver's seat.

7. The field work machine according to claim 6, wherein the seating sensor includes at least one of an image capturing device, a pressure-sensitive sensor, and an optical sensor.

8. The field work machine according to claim 1 or 2, comprising a spare seedling stand on which a spare seedling is placed, wherein
   the control unit prohibits the autonomous travel in response to a detection of a third action that is performed with respect to the spare seedling stand by the worker.

9. The field work machine according to claim 8, wherein

   the spare seedling stand includes a spare seedling sensor that detects presence or absence of a seedling mat on the stand, and
   the third action includes an action in which the seedling mat is taken out from the spare seedling stand by the worker.

10. The field work machine according to claim 1 or 2, comprising a planting device including a seedling stand, wherein

    the planting device includes a remaining seedling amount detection sensor that detects a remaining seedling amount on the seedling stand, and

the control unit prohibits the autonomous travel in response to a determination that the seedling amount on the seedling stand is equal to or less than a predetermined amount.

11. The field work machine according to claim 2, wherein the control unit sets a condition in which the armrest is in the use position as a condition for starting the autonomous travel.

12. The field work machine according to claim 11, comprising a biasing member that biases the armrest in the use position to the non-use position.

13. The field work machine according to claim 4, wherein the control unit sets a condition in which the supply amount setting unit is not being operated as a condition for starting the autonomous travel.

14. The field work machine according to claim 5, wherein the control unit sets a condition in which the lid is in the closed state as a condition for starting the autonomous travel.

15. The field work machine according to claim 6, wherein the control unit sets a condition in which the worker is sitting in the driver's seat as a condition for starting the autonomous travel.

# FIG. 1

# FIG. 2

RIGHT

FRONT ←——→ REAR

LEFT

# FIG. 3

RICE TRANSPLANTER 50

CONTROL UNIT

STORAGE UNIT 51

TRAVEL MODE CONTROL UNIT 52

TRAVEL CONTROL UNIT 53

WORK DEVICE CONTROL UNIT 54

NOTIFICATION CONTROL UNIT 55

INERTIAL MEASUREMENT DEVICE 41

POSITION ACQUISITION UNIT 61

AUTONOMOUS TRAVEL OPERATING UNIT 62

STEERING ACTUATOR 63

SUPPLY AMOUNT SETTING UNIT 64

NOTIFICATION UNIT 65

VEHICLE SPEED SENSOR 71

STEERING ANGLE SENSOR 72

PLANTING CLUTCH SENSOR 73

REMAINING SEEDLING AMOUNT DETECTION SENSOR 74

SPARE SEEDLING SENSOR 75

SEATING SENSOR 76

ARMREST POSITION DETECTION SENSOR 77

LID SENSOR 78

1

40

# FIG. 4

MANUAL TRAVEL MODE

S1
START COMMAND FOR AUTONOMOUS TRAVEL HAS BEEN ISSUED?    N

Y

S2
CONDITIONS FOR AUTONOMOUS TRAVEL ARE SATISFIED?    N

Y

S3
NOTIFICATION PROCESS

AUTONOMOUS TRAVEL MODE

# FIG. 5

AUTONOMOUS TRAVEL MODE

S11
PREDETERMINED ACTION HAS BEEN PERFORMED?    Y

N

S12
PREDETERMINED PROHIBITION CONDITIONS ARE SATISFIED?    N

Y

S13
PROHIBIT AUTONOMOUS TRAVEL

MANUAL TRAVEL MODE

# FIG. 6A

# FIG. 6B

# FIG. 7

```
                    ┌─────────────┐
                    │    START    │
                    └──────┬──────┘
                           │
                           ▼              S21
                    ╱─────────────╲  N
                   ╱  ARMRESTS ARE IN╲──────────────────┐
                   ╲ NON-USE POSITION?╱                  │
                    ╲─────────────╱                      │
                           │ Y                           │
                           ▼         S22                 │
              ┌───────────────────────┐                 │
              │   PROVIDE NOTIFICATION │                 │
              │      "LOWER THE        │                 │
              │   ARMRESTS TO START    │                 │
              │  AUTONOMOUS TRAVEL"    │                 │
              └───────────┬───────────┘                 │
                          │                              ▼                  S23
                          ▼                   ╱─────────────────╲  N
                  ╭──────────────╮           ╱  START COMMAND FOR ╲──────────────┐
                  │   MANUAL     │           ╲ AUTONOMOUS TRAVEL   ╱              │
                  │ TRAVEL MODE  │            ╲ HAS BEEN ISSUED?  ╱               │
                  ╰──────────────╯             ╲───────────────╱                 │
                                                      │ Y                        │
                                                      ▼         S24              │
                                          ┌───────────────────────┐             │
                                          │  SHIFT TO AUTONOMOUS   │             ▼
                                          │     TRAVEL MODE        │     ╭──────────────╮
                                          └───────────┬───────────┘     │   MANUAL     │
                                                      │                 │ TRAVEL MODE  │
                                                      ▼         S25      ╰──────────────╯
                                          ┌───────────────────────┐
                                          │       PROVIDE          │
                                          │  NOTIFICATION "USE     │
                                          │    THE ARMRESTS"       │
                                          └───────────┬───────────┘
                                                      │
                                                      ▼               S26
                                          ╱─────────────────╲  N
                                         ╱  ARMRESTS ARE IN  ╲──────────────┐
                                         ╲ NON-USE POSITION? ╱              │
                                          ╲───────────────╱                │
                                                  │ Y                      │
                                                  ▼         S27            ▼
                                      ┌───────────────────────┐   ╭──────────────╮
                                      │   SHIFT TO MANUAL      │   │ AUTONOMOUS   │
                                      │     TRAVEL MODE        │   │ TRAVEL MODE  │
                                      └───────────┬───────────┘   ╰──────────────╯
                                                  │
                                                  ▼         S28
                                      ┌───────────────────────┐
                                      │  PROVIDE NOTIFICATION  │
                                      │      "LOWER THE        │
                                      │   ARMRESTS TO START    │
                                      │  AUTONOMOUS TRAVEL"    │
                                      └───────────┬───────────┘
                                                  │
                                                  ▼
                                          ╭──────────────╮
                                          │   MANUAL     │
                                          │ TRAVEL MODE  │
                                          ╰──────────────╯
```

# FIG. 8A

191A  1913  1911b  19

1911  1912  1911a

# FIG. 8B

100  19  1911b

1911  1912  1913  1911a

191A

# FIG. 9

START AUTONOMOUS TRAVEL

S31
SEEDLING DETECTION SENSORS ARE OFF? — N

Y

S32
ISSUE SEEDLING TRANSFER ALARM

S33
N — SEEDLING DETECTION SENSORS REMAIN OFF?

Y

S34
NUMBER OF TIMES END-SIDE MOVEMENT SWITCH IS PRESSED IS N TIME(S) OR MORE? — N

STOP AUTONOMOUS TRAVEL

# FIG. 10

200

$\beta$

$2\alpha$

$\alpha$

Europäisches
Patentamt

European
Patent Office

Office européen
des brevets

# EUROPEAN SEARCH REPORT

**Application Number**

EP 24 15 1758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/201901 A1 (YANMAR HOLDINGS CO LTD [JP]) 29 September 2022 (2022-09-29) * abstract * * figure 3 * | 1 | INV. A01B69/04 |
| E | & EP 4 316 228 A1 (YANMAR HOLDINGS CO LTD [JP]) 7 February 2024 (2024-02-07) * the whole document * * paragraph [0024] * * figure 3 * | 1 | |
| X | EP 3 847 879 A2 (KUBOTA KK [JP]) 14 July 2021 (2021-07-14) * the whole document * * figures 11,13 * | 1 | |
| A,D | JP 2016 011024 A (KUBOTA KK) 21 January 2016 (2016-01-21) * the whole document * | 1-15 | |

TECHNICAL FIELDS
SEARCHED     (IPC)

A01B
A01D

The present search report has been drawn up for all claims

| Place of search | Date of completion of the search | Examiner |
|---|---|---|
| Munich | 28 May 2024 | Wagner, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 15 1758

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2024

| Patent document cited in search report | | Publication date | Patent family member(s) | | Publication date |
|---|---|---|---|---|---|
| WO 2022201901 | A1 | 29-09-2022 | CN | 117043704 A | 10-11-2023 |
| | | | EP | 4316228 A1 | 07-02-2024 |
| | | | JP | 2022146068 A | 05-10-2022 |
| | | | KR | 20230159820 A | 22-11-2023 |
| | | | US | 2024168495 A1 | 23-05-2024 |
| | | | WO | 2022201901 A1 | 29-09-2022 |
| EP 3847879 | A2 | 14-07-2021 | EP | 3847879 A2 | 14-07-2021 |
| | | | US | 2021191408 A1 | 24-06-2021 |
| | | | US | 2023341861 A1 | 26-10-2023 |
| JP 2016011024 | A | 21-01-2016 | NONE | | |

EPO FORM P0459

For more details about this annex : see Official Journal of the European Patent Office, No. 12/82

**EP 4 410 077 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016011024 A